(19) Europäisches Patentamt / European Patent Office / Office européen des brevets

(11) **EP 4 579 771 B1**

(12) **EUROPEAN PATENT SPECIFICATION**

(45) Date of publication and mention
of the grant of the patent:
**13.05.2026 Bulletin 2026/20**

(21) Application number: **24188035.0**

(22) Date of filing: **11.07.2024**

(51) International Patent Classification (IPC):
*H01M 4/04* (2006.01)  *H01M 4/136* (2010.01)
*H01M 4/1397* (2010.01)  *H01M 4/36* (2006.01)
*H01M 10/0525* (2010.01)  *H01M 4/02* (2006.01)

(52) Cooperative Patent Classification (CPC):
**H01M 4/366; H01M 4/0471; H01M 4/136;
H01M 4/1397; H01M 10/0525;** H01M 2004/021;
H01M 2004/028; Y02E 60/10

(54) **POSITIVE ELECTRODE ACTIVE MATERIAL AND LITHIUM-ION BATTERY**

POSITIVELEKTRODEN-AKTIVMATERIAL UND LITHIUM-IONEN-BATTERIE

MATÉRIAU ACTIF D'ÉLECTRODE POSITIVE ET BATTERIE AUX IONS LITHIUM

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.12.2023 CN 202311869845**

(43) Date of publication of application:
**02.07.2025 Bulletin 2025/27**

(73) Proprietor: **Eve Power Co., Ltd.**
**Jingmen, Hubei 448000 (CN)**

(72) Inventors:
• **Liu, Gang**
**Jingmen, Hubei, 448000 (CN)**

• **Liu, Shihao**
**Jingmen, Hubei, 448000 (CN)**
• **Shi, Zhongyang**
**Jingmen, Hubei, 448000 (CN)**
• **Liu, Fanfen**
**Jingmen, Hubei, 448000 (CN)**
• **Yuan, Dingding**
**Jingmen, Hubei, 448000 (CN)**

(74) Representative: **Petraz, Gilberto Luigi et al**
**GLP S.r.l.**
**Viale Europa Unita, 171**
**33100 Udine (IT)**

(56) References cited:
**EP-A1- 3 178 785    EP-A1- 3 301 741
EP-A1- 3 799 159    EP-B1- 3 614 466**

## Description

### Field

The present disclosure relates to the technical field of batteries and, particularly, to a positive electrode active material and a lithium-ion battery.

### Background

Lithium iron phosphate is widely used as positive electrode material for lithium-ion batteries due to its wide range of raw material sources, high theoretical specific capacity, stable voltage platform, good safety performance and low cost. However, the electronic conductivity of $LiFePO_4$ is relatively small at about $10^{-9}$ S/cm. Moreover, its olivine structure has only one-dimensional $Li^+$ diffusion channels, and the diffusion of $Li^+$ is hindered when the material structure is changed or the $LiFePO_4$ surface is blocked by impurities, resulting in low $Li^+$ diffusion coefficients (about $10^{-14}$-$10^{-16}$ $cm^2$/s at room temperature), which is especially serious at low temperatures.

In order to improve the electrical conductivity and low-temperature performance of $LiFePO_4$, the commonly used methods are: (1) doping high-valent ions or metal oxides to increase the intrinsic conductivity of the material; (2) reducing the particle size to shorten the diffusion distance of $Li^+$; and (3) employing carbon coating or coating other conductive substances on the surface of the $LiFePO_4$ material to increase the surface electrical conductivity of the material. However, the increased diffusion rate of $Li^+$ does not significantly improve the low-temperature performance of $LiFePO_4$. As $Li^+$ transfer at the interface is a rate-determining step in the $LiFePO_4$ electrode reaction compared to diffusion within the stereoscopic phase, the relatively poor low-temperature performance originates from the slow $Li^+$ transfer process at the interface between the electrode and the electrolyte. EP3614466 B1, EP3799159 A1, EP3301741 A1 discloses a cathode material which is coated with a carbonaceous film, and discloses a peak intensity ratio (ID/IG) between a D band and a G band in a Raman spectrum obtained by Raman spectrometry. EP3178785A1 discloses a method for manufacturing a base material powder having a carbon nanocoating layer, and discloses that the ratio of sp 2< bonds of the carbon-coated $LiFePO_4$ can be evaluated from the ratio of peak intensities of the D peak and the G peak, I(D)/I(G).

Therefore, there is an urgent need in the art for a technical scheme that promotes the transfer of $Li^+$ at the interface between the electrode and the electrolyte, improves the electrical conductivity of $LiFePO_4$, thereby increasing the rate performance, and improves the low-temperature performance of lithium iron phosphate positive electrode materials.

### Summary

The present disclosure aims to solve the following technical problems: how to improve the $Li^+$ transfer rate at the interface between the electrode and the electrolyte, and improve the electrical conductivity of lithium iron phosphate, thereby improving the rate performance, which improves the low-temperature performance of lithium iron phosphate.

As a first aspect, provided in the present disclosure is a positive electrode active material, including lithium iron phosphate coated with carbon layer, and an $I_D/I_G$ value of the positive electrode active material is 0.75-1.2, wherein a peak intensity at a wave length of 1360 $cm^{-1}$ is considered as $I_D$ and a peak intensity at a wave length of 1580 $cm^{-1}$ is considered as $I_G$ in a Raman spectrum of the positive electrode active material. A method of preparing the positive electrode active material comprises following steps: ball-milling a mixture of a FePO4 precursor, a lithium source, a carbon source, and a dispersant, and sintering to prepare the positive electrode active material; and wherein the carbon source comprises the glucose and the polyethylene glycol, wherein a mass ratio of the glucose to the polyethylene glycol is (0.6-1.2):1.

As a second aspect, provided in the present disclosure is a lithium-ion battery including the positive electrode active material.

In the present disclosure, the lithium-ion battery includes a positive electrode active material including the lithium iron phosphate coated with carbon layer with the $I_D/I_G$ value being 0.75-1.2, which increases the desolvation (removal of solventized shell) rate of $Li^+$ at the interface of the electrode and the electrolyte and enhances the desolvation ability, thereby increasing the electrical conductivity of lithium iron phosphate and improving the rate performance and the low-temperature performance of lithium-ion batteries including the positive electrode active material.

### Detailed description of the examples

In the present disclosure, $I_D/I_G$ value of the positive electrode active material is 0.75-1.2, which may be, but is not limited to the values listed below, such as 0.75, 0.78, 0.8, 0.82, 0.85, 0.88, 0.9, 0.92, 0.95, 0.98, 1.0, 1.02, 1.05, 1.08, 1.1, 1.12, 1.15, 1.18, and 1.2, and other values in the range but not listed are also applicable.

$I_D/I_G$ value of the lithium iron phosphate coated with carbon layer of the positive electrode active material in the present disclosure is 0.75-1.2, which increases the desolvation rate of $Li^+$ at the interface between the electrode and electrolyte and enhances the desolvation ability, thereby increasing the conductivity and rate performance of lithium iron phosphate, and improving the low-temperature performance of lithium iron phosphate.

In one implementation, $I_D/I_G$ value of the positive electrode active material is 0.8-1.0, which may be, but is not limited to the values listed below, such as 0.8, 0.82, 0.85, 0.88, 0.9, 0.92, 0.95, 0.98, and 1.0, and other values in the range but not listed are also applicable.

In the present scheme, the $I_D/I_G$ value of the positive electrode active material is 0.8-1.0. The $I_D/I_G$ value is in such a range to further increase the desolvation rate of $Li^+$ at the interface between the electrode and electrolyte and enhance the desolvation ability, thereby increasing the conductivity and rate performance of lithium iron phosphate, and improving the low-temperature performance of lithium iron phosphate.

In one implementation, a thickness of the carbon layer is 2-6nm, which may be, but is not limited to the values listed below, such as 2nm, 3nm, 4nm, 5nm, and 6nm, and other values in the range but not listed are also applicable.

In the present scheme, the thickness of the carbon layer is 2-6nm, which may cover lithium iron phosphate well, reduce the polarization phenomenon in the migration process, and play a certain shielding role, thereby improving the stability of the battery, while short lithium-ion transport channel is conducive to further improve the rate performance of lithium-ion batteries.

In one implementation, $D_{50}$ of the positive electrode active material is 0.8-1.6$\mu$m, which may be, but is not limited to the values listed below, such as, 0.8$\mu$m, 0.9$\mu$m, 1.0$\mu$m, 1.1$\mu$m, 1.2$\mu$m, 1.3$\mu$m, 1.4$\mu$m, 1.5$\mu$m, and 1.6$\mu$m, and other values in the range but not listed are also applicable.

In the present scheme, the $D_{50}$ of the positive electrode active material is 0.8-1.6$\mu$m. The lithium-ion transport channel is short when the $D_{50}$ is in such a range, which shortens the diffusion distance of $Li^+$ and improves the rate performance of lithium-ion batteries, and also ensures a sufficiently sized particle diameter so that the positive electrode active material is less likely to form soft agglomerates and avoids blocking during processing.

In one implementation, a method of preparing the positive electrode active material includes following steps: ball-milling a mixture of a $FePO_4$ precursor, a lithium source, a carbon source and a dispersant, and sintering to prepare the positive electrode active material.

In one implementation, the $FePO_4$ precursor includes at least one of $FePO_4$ and $FePO_4$ coated with a carbon source.

In one implementation, the carbon source includes at least one of glucose and polyethylene glycol.

In the present scheme, the carbon source includes at least one of glucose and polyethylene glycol. After melting, glucose may form a liquid with a certain viscosity, which is easy to be coated on the surface of lithium iron phosphate, and a porous carbon layer is formed after carbonization, which is conducive to the infiltration of the electrolyte and the migration of lithium-ions, and improves the rate performance of lithium-ion batteries. The pyrolysis of polyethylene glycol produces highly graphitized carbon, which is conducive to regulating the $I_D/I_G$ value in the range of 0.75-1.2. The synergistic effect of glucose and polyethylene glycol mentioned above is conducive to further increasing the electrical conductivity as well as rate performance of lithium iron phosphate, and to improving the low-temperature performance of lithium iron phosphate.

In one implementation, the carbon source includes the glucose and the polyethylene glycol, in which a mass ratio of the glucose to the polyethylene glycol is (0.6-1.2):1, which may be, but is not limited to the values listed below, such as, 0.6:1, 0.7:1, 0.8:1, 0.9:1, 1:1, 1.1:1, and 1.2:1, and other values in the range but not listed are also applicable.

In the present scheme, the carbon source includes the glucose and the polyethylene glycol, in which a mass ratio of the glucose to the polyethylene glycol is (0.6-1.2):1. It ensures that the carbon coating layer of the positive electrode active material is of sufficiently porous structure, which is conducive to the infiltration of the electrolyte and the migration of lithium-ions, and improves the rate performance of lithium-ion batteries; and it is also conducive to regulating the $I_D/I_G$ to an $I_D/I_G$ value in the range of 0.75-1.2, which is conducive to further increasing the electrical conductivity of lithium iron phosphate as well as its rate performance, and improving the low-temperature performance of lithium iron phosphate.

In one implementation, temperature of the sintering is 680-720°C.

Example 1

1. Preparation of lithium iron phosphate coated with carbon layer

In step 1, the preparation of precursor $FePO_4$:0.965mol ferrous sulfate heptahydrate ($FeSO_4 \cdot 7H_2O$) was dissolved in 100mL of deionized water; 100mL of phosphoric acid solution at a concentration of 10mol/L, 100mL of hydrogen peroxide at a concentration of 30% (mass fraction) and 7.5mL furfuryl alcohol monomer were added; and the reaction was carried out for 3h at 70°C. After the reaction was finished, the pH was adjusted to 1.5 by adding 0.1mol/L NaOH solution; after stirring at room temperature for 2h, the $FePO_4 \cdot 2H_2O$ coated with polyfurfuryl alcohol was obtained by filtration, rinsing, and grinding after drying for 5h at 90°C.

In step 2, the preparation of the lithium iron phosphate coated with carbon layer: the $FePO_4 \cdot 2H_2O$ coated with polyfurfuryl alcohol was dehydrated at 600°C for 6h in a box-type resistance furnace to obtain the $FePO_4$ coated with

polyfurfuryl alcohol; the obtained dehydrated $FePO_4$ coated with polyfurfuryl alcohol, 0.308mol of lithium acetate, 0.708mol of lithium hydroxide, 7g of glucose, and 7g of polyethylene glycol (PEG) were fed into a ball mill; 200mL of anhydrous ethanol was added as the dispersant; the precursor slurry was obtained by grinding with 2mm zirconium balls for 2h; the precursor slurry was placed in a microwave oven for drying; the slurry was then transferred to a tube-type resistance furnace protected by an $N_2$ atmosphere; and sintering was carried out at 695°C for 6.5h, to prepare the lithium iron phosphate coated with carbon layer.

2. Preparation of lithium-ion batteries

(1) Preparation of positive electrode sheet

The lithium iron phosphate coated with the carbon layer prepared in the present example was used as the positive electrode active material. Positive electrode active material of lithium iron phosphate coated with carbon layer, binder PVDF (polyvinylidene fluoride), dispersant PVP (polyvinylpyrrolidone), and conductive agent SP (conductive carbon black Super-P) were mixed and stirred homogeneously to obtain the positive electrode slurry according to a mass ratio of 97.4%:1.6%:0.2%:0.8%. Then, the positive electrode slurry was applied on the aluminum foil by coating process, and the positive electrode sheet was obtained after drying and cold pressing process.

(2) Preparation of negative electrode sheet

The negative electrode active material of graphite, binder SBR (styrene butadiene rubber), dispersant CMC (Carboxymethyl Cellulose), and conductive agent SP (conductive carbon black Super-P) were mixed and stirred homogeneously to obtain the negative electrode slurry according to a mass ratio of 96.7%:1.5%:1.2%:0.6%. Then, the negative electrode slurry was applied on the copper foil by coating process, and the negative electrode sheet was obtained after drying and cold pressing process.

(3) Selection of electrolyte

Vinyl carbonate electrolyte was selected for the preparation of lithium-ion batteries.

(4) Selection of separator

Polyethylene (PE) film is used as the separator.

(5) Preparation of lithium-ion batteries

The aforementioned positive electrode sheet, separator, and negative electrode sheet were sequentially stacked, so that the separator was between the positive electrode sheet and the negative electrode sheet to play the role of separation, and were then wound to obtain a bare cell;

3. Raman spectroscopy

In step 1, Sample making: The positive electrode active material of lithium iron phosphate coated with a carbon layer was laid flat in a sample tank to make a sample, and attention should be paid to keeping the upper surfaces of the samples made therefrom on the same horizontal plane.

In step 2, Testing: The equipment model i-Raman ® Prime instrument connected to the computer and BWSpec software was used for conducting Raman testing, the distance between the laser and the test sample was adjusted to collect the Raman spectrum, the peak intensity was adjusted to the maximum Raman peak intensity for the focusing of the optimal test position, the data was saved, and the Raman curve was analyzed with the BW Spec software by deducting the background baseline. Data processing: The peak intensity at a wave length of about 1360cm$^{-1}$ was read as $I_D$, and the peak intensity at a wave length of about 1580cm$^{-1}$ was read as $I_G$, and the value of $I_D/I_G$ was calculated.

Example 2

1. Preparation of lithium iron phosphate coated with carbon layer

In step 1, the preparation of precursor $FePO_4$:0.965mol ferrous sulfate heptahydrate ($FeSO_4 \cdot 7H_2O$) was dissolved in 100mL of deionized water; 100mL of phosphoric acid solution at a concentration of 10mol/L, 100mL of hydrogen peroxide at a concentration of 30% (mass fraction) and 7.5mL furfuryl alcohol monomer were added; and the reaction was carried out for 3h at 70°C. After the reaction was finished, the pH was adjusted to 1.5 by adding 0.1mol/L NaOH solution; after stirring at room temperature for 2h, the $FePO_4 \cdot 2H_2O$ coated with polyfurfuryl alcohol was obtained by filtration, rinsing, and grinding after drying for 5h at 90°C.

In step 2, the preparation of the lithium iron phosphate coated with carbon layer: the $FePO_4 \cdot 2H_2O$ coated with polyfurfuryl alcohol was dehydrated at 600°C for 6h in a box-type resistance furnace to obtain the $FePO_4$ coated with polyfurfuryl alcohol; the obtained dehydrated $FePO_4$ coated with polyfurfuryl alcohol, 0.308mol of lithium acetate, 0.708mol of lithium hydroxide, 7g of glucose, and 7g of polyethylene glycol (PEG) were fed into a ball mill; 200mL of anhydrous ethanol was added as the dispersant; the precursor slurry was obtained by grinding with 2mm zirconium balls for 2h; the precursor slurry was placed in a microwave oven for drying; the slurry was then transferred to a tube-type resistance furnace protected by an $N_2$ atmosphere; and sintering was carried out at 695°C for 8h, to prepare the lithium iron phosphate coated with carbon layer.

2. Preparation of lithium-ion batteries

Adopting the lithium iron phosphate coated with carbon layer prepared in the present example as the positive electrode active material, the preparation of the lithium-ion battery of the present example is carried out with reference to the scheme for preparing the lithium-ion battery adopted in Example 1, and except for the lithium iron phosphate coated with carbon layer adopted as the positive electrode active material, the other materials used for preparing the lithium-ion battery as well as the proportion and the operation in the present example are all strictly consistent with those corresponding to the descriptions in Example 1.

3. Raman spectroscopy

Raman spectroscopy using the lithium iron phosphate positive electrode active material coated with carbon layer prepared in the present example was strictly consistent with the corresponding descriptions in Example 1.

Example 3

1. Preparation of lithium iron phosphate coated with carbon layer

In step 1, the preparation of precursor $FePO_4$: 0.965mol ferrous sulfate heptahydrate ($FeSO_4 \cdot 7H_2O$) was dissolved in 100mL of deionized water; 100mL of phosphoric acid solution at a concentration of 10mol/L, 100mL of hydrogen peroxide at a concentration of 30% (mass fraction) and 7.5mL furfuryl alcohol monomer were added; and the reaction was carried out for 3h at 70°C. After the reaction was finished, the pH was adjusted to 1.5 by adding 0.1mol/L NaOH solution; after stirring at room temperature for 2h, the $FePO_4 \cdot 2H_2O$ coated with polyfurfuryl alcohol was obtained by filtration, rinsing, and grinding after drying for 5h at 90°C.

In step 2, the preparation of the lithium iron phosphate coated with carbon layer: the $FePO_4 \cdot 2H_2O$ coated with polyfurfuryl alcohol was dehydrated at 600°C for 6h in a box-type resistance furnace to obtain the $FePO_4$ coated with polyfurfuryl alcohol; the obtained dehydrated $FePO_4$ coated with polyfurfuryl alcohol, 0.308mol of lithium acetate, 0.708mol of lithium hydroxide, 7g of glucose, and 7g of polyethylene glycol (PEG) were fed into a ball mill; 200mL of anhydrous ethanol was added as the dispersant; the precursor slurry was obtained by grinding with 2mm zirconium balls for 2h; the precursor slurry was placed in a microwave oven for drying; the slurry was then transferred to a tube-type resistance furnace protected by an $N_2$ atmosphere; and sintering was carried out at 695°C for 6h, to prepare the lithium iron phosphate coated with carbon layer.

2. Preparation of lithium-ion batteries

Adopting the lithium iron phosphate coated with carbon layer prepared in the present example as the positive electrode active material, the preparation of the lithium-ion battery of the present example is carried out with reference to the scheme for preparing the lithium-ion battery adopted in Example 1, and except for the lithium iron phosphate coated with carbon layer adopted as the positive electrode active material, the other materials used for preparing the lithium-ion battery as well as the proportion and the operation in the present example are all strictly consistent with those corresponding to the descriptions in Example 1.

3. Raman spectroscopy

Raman spectroscopy using the lithium iron phosphate positive electrode active material coated with carbon layer prepared in the present example was strictly consistent with the corresponding descriptions in Example 1.

Example 4

1. Preparation of lithium iron phosphate coated with carbon layer

In step 1, the preparation of precursor $FePO_4$: 0.965mol ferrous sulfate heptahydrate ($FeSO_4 \cdot 7H_2O$) was dissolved in 100mL of deionized water; 100mL of phosphoric acid solution at a concentration of 10mol/L, 100mL of hydrogen peroxide at a concentration of 30% (mass fraction) and 7.5mL furfuryl alcohol monomer were added; and the reaction was carried out for 3h at 70°C. After the reaction was finished, the pH was adjusted to 1.5 by adding 0.1mol/L NaOH solution; after stirring at room temperature for 2h, the $FePO_4 \cdot 2H_2O$ coated with polyfurfuryl alcohol was obtained by filtration, rinsing, and grinding after drying for 5h at 90°C.

In step 2, the preparation of the lithium iron phosphate coated with carbon layer: the $FePO_4 \cdot 2H_2O$ coated with polyfurfuryl alcohol was dehydrated at 600°C for 6h in a box-type resistance furnace to obtain the $FePO_4$ coated with polyfurfuryl alcohol; the obtained dehydrated $FePO_4$ coated with polyfurfuryl alcohol, 0.308mol of lithium acetate, 0.708mol of lithium hydroxide, 7g of glucose, and 7g of polyethylene glycol (PEG) were fed into a ball mill; 200mL of anhydrous ethanol was added as the dispersant; the precursor slurry was obtained by grinding with 2mm zirconium balls for 1.5h; the precursor slurry was placed in a microwave oven for drying; the slurry was then transferred to a tube-type resistance furnace protected by an $N_2$ atmosphere; and sintering was carried out at 695°C for 6.5h, to prepare the lithium iron phosphate coated with carbon layer.

2. Preparation of lithium-ion batteries

Adopting the lithium iron phosphate coated with carbon layer prepared in the present example as the positive electrode active material, the preparation of the lithium-ion battery of the present example is carried out with reference to the scheme for preparing the lithium-ion battery adopted in Example 1, and except for the lithium iron phosphate coated with carbon layer adopted as the positive electrode active material, the other materials used for preparing the lithium-ion battery as well as the proportion and the operation in the present example are all strictly consistent with those corresponding to the descriptions in Example 1.

3. Raman spectroscopy

Raman spectroscopy using the lithium iron phosphate positive electrode active material coated with carbon layer prepared in the present example was strictly consistent with the corresponding descriptions in Example 1.

Example 5

1. Preparation of lithium iron phosphate coated with carbon layer

In step 1, the preparation of precursor $FePO_4$: 0.965mol ferrous sulfate heptahydrate ($FeSO_4 \cdot 7H_2O$) was dissolved in 100mL of deionized water; 100mL of phosphoric acid solution at a concentration of 10mol/L, 100mL of hydrogen peroxide at a concentration of 30% (mass fraction) and 7.5mL furfuryl alcohol monomer were added; and the reaction was carried out for 3h at 70°C. After the reaction was finished, the pH was adjusted to 1.5 by adding 0.1mol/L NaOH solution; after stirring at room temperature for 2h, the $FePO_4 \cdot 2H_2O$ coated with polyfurfuryl alcohol was obtained by filtration, rinsing, and grinding after drying for 5h at 90°C.

In step 2, the preparation of the lithium iron phosphate coated with carbon layer: the $FePO_4 \cdot 2H_2O$ coated with polyfurfuryl alcohol was dehydrated at 600°C for 6h in a box-type resistance furnace to obtain the $FePO_4$ coated with polyfurfuryl alcohol; the obtained dehydrated $FePO_4$ coated with polyfurfuryl alcohol, 0.308mol of lithium acetate, 0.708mol of lithium hydroxide, 7g of glucose, and 7g of polyethylene glycol (PEG) were fed into a ball mill; 200mL of anhydrous ethanol was added as the dispersant; the precursor slurry was obtained by grinding with 2mm zirconium balls for 2.5h; the precursor slurry was placed in a microwave oven for drying; the slurry was then transferred to a tube-type resistance furnace protected by an $N_2$ atmosphere; and sintering was carried out at 695°C for 6.5h, to prepare the lithium iron phosphate coated with carbon layer.

2. Preparation of lithium-ion batteries

Adopting the lithium iron phosphate coated with carbon layer prepared in the present example as the positive electrode active material, the preparation of the lithium-ion battery of the present example is carried out with reference to the scheme for preparing the lithium-ion battery adopted in Example 1, and except for the lithium iron phosphate coated with carbon layer adopted as the positive electrode active material, the other materials used for preparing the lithium-ion battery as well as the proportion and the operation in the present example are all strictly consistent with those corresponding to the descriptions in Example 1.

3. Raman spectroscopy

Raman spectroscopy using the lithium iron phosphate positive electrode active material coated with carbon layer prepared in the present example was strictly consistent with the corresponding descriptions in Example 1.

Example 6

1. Preparation of lithium iron phosphate coated with carbon layer

In step 1, the preparation of precursor $FePO_4$: 0.965mol ferrous sulfate heptahydrate ($FeSO_4 \cdot 7H_2O$) was dissolved in 100mL of deionized water; 100mL of phosphoric acid solution at a concentration of 10mol/L, 100mL of hydrogen peroxide at a concentration of 30% (mass fraction) and 8.5mL furfuryl alcohol monomer were added; and the reaction was carried out for 3h at 70°C. After the reaction was finished, the pH was adjusted to 1.5 by adding 0.1mol/L NaOH solution; after stirring at room temperature for 2h, the $FePO_4 \cdot 2H_2O$ coated with polyfurfuryl alcohol was obtained by filtration, rinsing, and grinding after drying for 5h at 90°C.

In step 2, the preparation of the lithium iron phosphate coated with carbon layer: the $FePO_4 \cdot 2H_2O$ coated with polyfurfuryl alcohol was dehydrated at 600°C for 6.5h in a box-type resistance furnace to obtain the $FePO_4$ coated with polyfurfuryl alcohol; the obtained dehydrated $FePO_4$ coated with polyfurfuryl alcohol, 0.308mol of lithium acetate, 0.708mol of lithium hydroxide, 7g of glucose, and 7g of polyethylene glycol (PEG) were fed into a ball mill; 200mL of anhydrous ethanol was added as the dispersant; the precursor slurry was obtained by grinding with 2mm zirconium balls for 2h; the precursor slurry was placed in a microwave oven for drying; the slurry was then transferred to a tube-type resistance furnace protected by an $N_2$ atmosphere; and sintering was carried out at 695°C for 6h, to prepare the lithium iron phosphate coated with carbon layer.

2. Preparation of lithium-ion batteries

Adopting the lithium iron phosphate coated with carbon layer prepared in the present example as the positive electrode active material, the preparation of the lithium-ion battery of the present example is carried out with reference to the scheme for preparing the lithium-ion battery adopted in Example 1, and except for the lithium iron phosphate coated with carbon layer adopted as the positive electrode active material, the other materials used for preparing the lithium-ion battery as well as the proportion and the operation in the present example are all strictly consistent with those corresponding to the descriptions in Example 1.

3. Raman spectroscopy

Raman spectroscopy using the lithium iron phosphate positive electrode active material coated with carbon layer prepared in the present example was strictly consistent with the corresponding descriptions in Example 1.

Example 7

1. Preparation of lithium iron phosphate coated with carbon layer

In step 1, the preparation of precursor $FePO_4$: 0.965mol ferrous sulfate heptahydrate ($FeSO_4 \cdot 7H_2O$) was dissolved in 100mL of deionized water; 100mL of phosphoric acid solution at a concentration of 10mol/L, 100mL of hydrogen peroxide at a concentration of 30% (mass fraction) and 6.5mL furfuryl alcohol monomer were added; and the reaction was carried out for 3h at 70°C. After the reaction was finished, the pH was adjusted to 1.5 by adding 0.1mol/L NaOH solution; after stirring at room temperature for 2h, the $FePO_4 \cdot 2H_2O$ coated with polyfurfuryl alcohol was obtained by filtration, rinsing, and grinding after drying for 5h at 90°C.

In step 2, the preparation of the lithium iron phosphate coated with carbon layer: the $FePO_4 \cdot 2H_2O$ coated with polyfurfuryl alcohol was dehydrated at 600°C for 6.5h in a box-type resistance furnace to obtain the $FePO_4$ coated with polyfurfuryl alcohol; the obtained dehydrated $FePO_4$ coated with polyfurfuryl alcohol, 0.308mol of lithium acetate, 0.708mol of lithium hydroxide, 7g of glucose, and 7g of polyethylene glycol (PEG) were fed into a ball mill; 200mL of anhydrous ethanol was added as the dispersant; the precursor slurry was obtained by grinding with 2mm zirconium balls for 2h; the precursor slurry was placed in a microwave oven for drying; the slurry was then transferred to a tube-type resistance furnace protected by an $N_2$ atmosphere; and sintering was carried out at 695°C for 6h, to prepare the lithium iron phosphate coated with carbon layer.

2. Preparation of lithium-ion batteries

Adopting the lithium iron phosphate coated with carbon layer prepared in the present example as the positive electrode active material, the preparation of the lithium-ion battery of the present example is carried out with reference to the scheme for preparing the lithium-ion battery adopted in Example 1, and except for the lithium iron phosphate coated with carbon layer adopted as the positive electrode active material, the other materials used for preparing the lithium-ion battery as well as the proportion and the operation in the present example are all strictly consistent with those corresponding to the descriptions in Example 1.

3. Raman spectroscopy

Raman spectroscopy using the lithium iron phosphate positive electrode active material coated with carbon layer prepared in the present example was strictly consistent with the corresponding descriptions in Example 1.

Example 8

1. Preparation of lithium iron phosphate coated with carbon layer

In step 1, the preparation of precursor $FePO_4$: 0.965mol ferrous sulfate heptahydrate ($FeSO_4 \cdot 7H_2O$) was dissolved in 100mL of deionized water; 100mL of phosphoric acid solution at a concentration of 10mol/L, 100mL of hydrogen peroxide at a concentration of 30% (mass fraction) and 7.5mL furfuryl alcohol monomer were added; and the reaction was carried out for 3h at 70°C. After the reaction was finished, the pH was adjusted to 1.5 by adding 0.1mol/L NaOH solution; after stirring at room temperature for 2h, the $FePO_4 \cdot 2H_2O$ coated with polyfurfuryl alcohol was obtained by filtration, rinsing, and grinding after drying for 5h at 90°C.

In step 2, the preparation of the lithium iron phosphate coated with carbon layer: the $FePO_4 \cdot 2H_2O$ coated with polyfurfuryl alcohol was dehydrated at 600°C for 6h in a box-type resistance furnace to obtain the $FePO_4$ coated with polyfurfuryl alcohol; the obtained dehydrated $FePO_4$ coated with polyfurfuryl alcohol, 0.308mol of lithium acetate, 0.708mol of lithium hydroxide, 8g of glucose, and 7g of polyethylene glycol (PEG) were fed into a ball mill; 200mL of anhydrous ethanol was added as the dispersant; the precursor slurry was obtained by grinding with 2mm zirconium balls for 2h; the precursor slurry was placed in a microwave oven for drying; the slurry was then transferred to a tube-type resistance furnace protected by an $N_2$ atmosphere; and sintering was carried out at 695°C for 6.5h, to prepare the lithium iron phosphate coated with carbon layer.

2. Preparation of lithium-ion batteries

Adopting the lithium iron phosphate coated with carbon layer prepared in the present example as the positive electrode active material, the preparation of the lithium-ion battery of the present example is carried out with reference to the scheme for preparing the lithium-ion battery adopted in Example 1, and except for the lithium iron phosphate coated with carbon layer adopted as the positive electrode active material, the other materials used for preparing the lithium-ion battery as well as the proportion and the operation in the present example are all strictly consistent with those corresponding to the descriptions in Example 1.

3. Raman spectroscopy

Raman spectroscopy using the lithium iron phosphate positive electrode active material coated with carbon layer prepared in the present example was strictly consistent with the corresponding descriptions in Example 1.

Example 9

1. Preparation of lithium iron phosphate coated with carbon layer

In step 1, the preparation of precursor $FePO_4$: 0.965mol ferrous sulfate heptahydrate ($FeSO_4 \cdot 7H_2O$) was dissolved in 100mL of deionized water; 100mL of phosphoric acid solution at a concentration of 10mol/L, 100mL of hydrogen peroxide at a concentration of 30% (mass fraction) and 7.5mL furfuryl alcohol monomer were added; and the reaction was carried out for 3h at 70°C. After the reaction was finished, the pH was adjusted to 1.5 by adding 0.1mol/L NaOH solution; after stirring at room temperature for 2h, the $FePO_4 \cdot 2H_2O$ coated with polyfurfuryl alcohol was obtained by filtration, rinsing, and grinding after drying for 5h at 90°C.

In step 2, the preparation of the lithium iron phosphate coated with carbon layer: the $FePO_4 \cdot 2H_2O$ coated with polyfurfuryl alcohol was dehydrated at 600°C for 6h in a box-type resistance furnace to obtain the $FePO_4$ coated with polyfurfuryl alcohol; the obtained dehydrated $FePO_4$ coated with polyfurfuryl alcohol, 0.308mol of lithium acetate, 0.708mol of lithium hydroxide, 6g of glucose, and 7g of polyethylene glycol (PEG) were fed into a ball mill; 200mL of anhydrous ethanol was added as the dispersant; the precursor slurry was obtained by grinding with 2mm zirconium balls for 2h; the precursor slurry was placed in a microwave oven for drying; the slurry was then transferred to a tube-type resistance furnace protected by an $N_2$ atmosphere; and sintering was carried out at 695°C for 6.5h, to prepare the lithium iron phosphate coated with carbon layer.

2. Preparation of lithium-ion batteries

Adopting the lithium iron phosphate coated with carbon layer prepared in the present example as the positive electrode active material, the preparation of the lithium-ion battery of the present example is carried out with reference to the scheme for preparing the lithium-ion battery adopted in Example 1, and except for the lithium iron phosphate coated with carbon layer adopted as the positive electrode active material, the other materials used for preparing the lithium-ion battery as well as the proportion and the operation in the present example are all strictly consistent with those corresponding to the descriptions in Example 1.

3. Raman spectroscopy

Raman spectroscopy using the lithium iron phosphate positive electrode active material coated with carbon layer prepared in the present example was strictly consistent with the corresponding descriptions in Example 1.

Example 10

1. Preparation of lithium iron phosphate coated with carbon layer

In step 1, the preparation of precursor $FePO_4$: 0.965mol ferrous sulfate heptahydrate ($FeSO_4 \cdot 7H_2O$) was dissolved in 100mL of deionized water; 100mL of phosphoric acid solution at a concentration of 10mol/L, 100mL of hydrogen peroxide at a concentration of 30% (mass fraction) and 7.5mL furfuryl alcohol monomer were added; and the reaction was carried out for 3h at 70°C. After the reaction was finished, the pH was adjusted to 1.5 by adding 0.1mol/L NaOH solution; after stirring at room temperature for 2h, the $FePO_4 \cdot 2H_2O$ coated with polyfurfuryl alcohol was obtained by filtration, rinsing, and grinding after drying for 5h at 90°C.

In step 2, the preparation of the lithium iron phosphate coated with carbon layer: the $FePO_4 \cdot 2H_2O$ coated with polyfurfuryl alcohol was dehydrated at 600°C for 6h in a box-type resistance furnace to obtain the $FePO_4$ coated with polyfurfuryl alcohol; the obtained dehydrated $FePO_4$ coated with polyfurfuryl alcohol, 0.308mol of lithium acetate, 0.708mol of lithium hydroxide, 7g of glucose, and 8g of polyethylene glycol (PEG) were fed into a ball mill; 200mL of anhydrous ethanol was added as the dispersant; the precursor slurry was obtained by grinding with 2mm zirconium balls for 2h; the precursor slurry was placed in a microwave oven for drying; the slurry was then transferred to a tube-type resistance furnace protected by an $N_2$ atmosphere; and sintering was carried out at 695°C for 6.5h, to prepare the lithium iron phosphate coated with carbon layer.

2. Preparation of lithium-ion batteries

Adopting the lithium iron phosphate coated with carbon layer prepared in the present example as the positive electrode active material, the preparation of the lithium-ion battery of the present example is carried out with reference to the scheme for preparing the lithium-ion battery adopted in Example 1, and except for the lithium iron phosphate coated with carbon layer adopted as the positive electrode active material, the other materials used for preparing the lithium-ion battery as well as the proportion and the operation in the present example are all strictly consistent with those corresponding to the descriptions in Example 1.

3. Raman spectroscopy

Raman spectroscopy using the lithium iron phosphate positive electrode active material coated with carbon layer prepared in the present example was strictly consistent with the corresponding descriptions in Example 1.

Example 11

1. Preparation of lithium iron phosphate coated with carbon layer

In step 1, the preparation of precursor $FePO_4$: 0.965mol ferrous sulfate heptahydrate ($FeSO_4 \cdot 7H_2O$) was dissolved in 100mL of deionized water; 100mL of phosphoric acid solution at a concentration of 10mol/L, 100mL of hydrogen peroxide at a concentration of 30% (mass fraction) and 7.5mL furfuryl alcohol monomer were added; and the reaction was carried out for 3h at 70°C. After the reaction was finished, the pH was adjusted to 1.5 by adding 0.1mol/L NaOH solution; after stirring at room temperature for 2h, the $FePO_4 \cdot 2H_2O$ coated with polyfurfuryl alcohol was obtained by filtration, rinsing, and grinding after drying for 5h at 90°C.

In step 2, the preparation of the lithium iron phosphate coated with carbon layer: the $FePO_4 \cdot 2H_2O$ coated with polyfurfuryl alcohol was dehydrated at 600°C for 6h in a box-type resistance furnace to obtain the $FePO_4$ coated with polyfurfuryl alcohol; the obtained dehydrated $FePO_4$ coated with polyfurfuryl alcohol, 0.308mol of lithium acetate, 0.708mol of lithium hydroxide, 7g of glucose, and 6g of polyethylene glycol (PEG) were fed into a ball mill; 200mL of anhydrous ethanol was added as the dispersant; the precursor slurry was obtained by grinding with 2mm zirconium balls for 2h; the precursor slurry was placed in a microwave oven for drying; the slurry was then transferred to a tube-type resistance furnace protected by an $N_2$ atmosphere; and sintering was carried out at 695°C for 6.5h, to prepare the lithium iron phosphate coated with carbon layer.

2. Preparation of lithium-ion batteries

Adopting the lithium iron phosphate coated with carbon layer prepared in the present example as the positive electrode active material, the preparation of the lithium-ion battery of the present example is carried out with reference to the scheme for preparing the lithium-ion battery adopted in Example 1, and except for the lithium iron phosphate coated with carbon layer adopted as the positive electrode active material, the other materials used for preparing the lithium-ion battery as well as the proportion and the operation in the present example are all strictly consistent with those corresponding to the descriptions in Example 1.

3. Raman spectroscopy

Raman spectroscopy using the lithium iron phosphate positive electrode active material coated with carbon layer prepared in the present example was strictly consistent with the corresponding descriptions in Example 1.

Example 12

1. Preparation of lithium iron phosphate coated with carbon layer

In step 1, the preparation of precursor $FePO_4$: 0.965mol ferrous sulfate heptahydrate ($FeSO_4 \cdot 7H_2O$) was dissolved in 100mL of deionized water; 100mL of phosphoric acid solution at a concentration of 10mol/L, 100mL of hydrogen peroxide at a concentration of 30% (mass fraction) and 7.5mL furfuryl alcohol monomer were added; and the reaction was carried out for 3h at 70°C. After the reaction was finished, the pH was adjusted to 1.5 by adding 0.1mol/L NaOH solution; after stirring at room temperature for 2h, the $FePO_4 \cdot 2H_2O$ coated with polyfurfuryl alcohol was obtained by filtration, rinsing, and grinding after drying for 5h at 90°C.

In step 2, the preparation of the lithium iron phosphate coated with carbon layer: the $FePO_4 \cdot 2H_2O$ coated with polyfurfuryl alcohol was dehydrated at 600°C for 6.5h in a box-type resistance furnace to obtain the $FePO_4$ coated with polyfurfuryl alcohol; the obtained dehydrated $FePO_4$ coated with polyfurfuryl alcohol, 0.308mol of lithium acetate, 0.708mol of lithium hydroxide, 6g of glucose, and 6g of polyethylene glycol (PEG) were fed into a ball mill; 200mL of anhydrous ethanol was added as the dispersant; the precursor slurry was obtained by grinding with 2mm zirconium balls for 2h; the precursor slurry was placed in a microwave oven for drying; the slurry was then transferred to a tube-type resistance furnace protected by an $N_2$ atmosphere; and sintering was carried out at 695°C for 6h, to prepare the lithium iron phosphate coated with carbon layer.

2. Preparation of lithium-ion batteries

Adopting the lithium iron phosphate coated with carbon layer prepared in the present example as the positive electrode active material, the preparation of the lithium-ion battery of the present example is carried out with reference to the scheme for preparing the lithium-ion battery adopted in Example 1, and except for the lithium iron phosphate coated with carbon layer adopted as the positive electrode active material, the other materials used for preparing the lithium-ion battery as well as the proportion and the operation in the present example are all strictly consistent with those corresponding to the descriptions in Example 1.

3. Raman spectroscopy

Raman spectroscopy using the lithium iron phosphate positive electrode active material coated with carbon layer prepared in the present example was strictly consistent with the corresponding descriptions in Example 1.

Example 13

1. Preparation of lithium iron phosphate coated with carbon layer

In step 1, the preparation of precursor $FePO_4$: 0.965mol ferrous sulfate heptahydrate ($FeSO_4 \cdot 7H_2O$) was dissolved in 100mL of deionized water; 100mL of phosphoric acid solution at a concentration of 10mol/L, 100mL of hydrogen peroxide at a concentration of 30% (mass fraction) and 7.5mL furfuryl alcohol monomer were added; and the reaction was carried out for 3h at 70°C. After the reaction was finished, the pH was adjusted to 1.5 by adding 0.1mol/L NaOH solution; after stirring at room temperature for 2h, the $FePO_4 \cdot 2H_2O$ coated with polyfurfuryl alcohol was obtained by filtration, rinsing, and grinding after drying for 5h at 90°C.

In step 2, the preparation of the lithium iron phosphate coated with carbon layer: the $FePO_4 \cdot 2H_2O$ coated with polyfurfuryl alcohol was dehydrated at 600°C for 6.5h in a box-type resistance furnace to obtain the $FePO_4$ coated with polyfurfuryl alcohol; the obtained dehydrated $FePO_4$ coated with polyfurfuryl alcohol, 0.308mol of lithium acetate, 0.708mol of lithium hydroxide, 10g of glucose, and 10g of polyethylene glycol (PEG) were fed into a ball mill; 200mL of anhydrous ethanol was added as the dispersant; the precursor slurry was obtained by grinding with 2mm zirconium balls for 2h; the precursor slurry was placed in a microwave oven for drying; the slurry was then transferred to a tube-type resistance furnace protected by an $N_2$ atmosphere; and sintering was carried out at 695°C for 6h, to prepare the lithium iron phosphate coated with carbon layer.

2. Preparation of lithium-ion batteries

Adopting the lithium iron phosphate coated with carbon layer prepared in the present example as the positive electrode active material, the preparation of the lithium-ion battery of the present example is carried out with reference to the scheme for preparing the lithium-ion battery adopted in Example 1, and except for the lithium iron phosphate coated with carbon layer adopted as the positive electrode active material, the other materials used for preparing the lithium-ion battery as well as the proportion and the operation in the present example are all strictly consistent with those corresponding to the descriptions in Example 1.

3. Raman spectroscopy

Raman spectroscopy using the lithium iron phosphate positive electrode active material coated with carbon layer prepared in the present example was strictly consistent with the corresponding descriptions in Example 1.

Example 14

1. Preparation of lithium iron phosphate coated with carbon layer

In step 1, the preparation of precursor $FePO_4$: 0.965mol ferrous sulfate heptahydrate ($FeSO_4 \cdot 7H_2O$) was dissolved in 100mL of deionized water; 100mL of phosphoric acid solution at a concentration of 10mol/L, 100mL of hydrogen peroxide at a concentration of 30% (mass fraction) and 7.5mL furfuryl alcohol monomer were added; and the reaction was carried out for 3h at 70°C. After the reaction was finished, the pH was adjusted to 1.5 by adding 0.1mol/L NaOH solution; after stirring at room temperature for 2h, the $FePO_4 \cdot 2H_2O$ coated with polyfurfuryl alcohol was obtained by filtration, rinsing, and grinding after drying for 5h at 90°C.

In step 2, the preparation of the lithium iron phosphate coated with carbon layer: the $FePO_4 \cdot 2H_2O$ coated with polyfurfuryl alcohol was dehydrated at 600°C for 6h in a box-type resistance furnace to obtain the $FePO_4$ coated with polyfurfuryl alcohol; the obtained dehydrated $FePO_4$ coated with polyfurfuryl alcohol, 0.308mol of lithium acetate, 0.708mol of lithium hydroxide, 4g of glucose, and 4g of polyethylene glycol (PEG) were fed into a ball mill; 200mL of anhydrous ethanol was added as the dispersant; the precursor slurry was obtained by grinding with 2mm zirconium balls for 2h; the precursor slurry was placed in a microwave oven for drying; the slurry was then transferred to a tube-type resistance furnace protected by an $N_2$ atmosphere; and sintering was carried out at 695°C for 6.5h, to prepare the lithium iron phosphate coated with carbon layer.

2. Preparation of lithium-ion batteries

Adopting the lithium iron phosphate coated with carbon layer prepared in the present example as the positive electrode active material, the preparation of the lithium-ion battery of the present example is carried out with reference to the scheme for preparing the lithium-ion battery adopted in Example 1, and except for the lithium iron phosphate coated with carbon layer adopted as the positive electrode active material, the other materials used for preparing the lithium-ion battery as well as the proportion and the operation in the present example are all strictly consistent with those corresponding to the descriptions in Example 1.

3. Raman spectroscopy

Raman spectroscopy using the lithium iron phosphate positive electrode active material coated with carbon layer prepared in the present example was strictly consistent with the corresponding descriptions in Example 1.

Example 15

1. Preparation of lithium iron phosphate coated with carbon layer

In step 1, the preparation of precursor $FePO_4$: 0.965mol ferrous sulfate heptahydrate ($FeSO_4 \cdot 7H_2O$) was dissolved in 100mL of deionized water; 100mL of phosphoric acid solution at a concentration of 10mol/L, 100mL of hydrogen peroxide at a concentration of 30% (mass fraction) and 8.5mL furfuryl alcohol monomer were added; and the reaction was carried out for 3h at 70°C. After the reaction was finished, the pH was adjusted to 1.5 by adding 0.1mol/L NaOH solution; after stirring at room temperature for 2h, the $FePO_4 \cdot 2H_2O$ coated with polyfurfuryl alcohol was obtained by filtration, rinsing, and grinding after drying for 5h at 90°C.

In step 2, the preparation of the lithium iron phosphate coated with carbon layer: the $FePO_4 \cdot 2H_2O$ coated with polyfurfuryl alcohol was dehydrated at 600°C for 6h in a box-type resistance furnace to obtain the $FePO_4$ coated with polyfurfuryl alcohol; the obtained dehydrated $FePO_4$ coated with polyfurfuryl alcohol, 0.308mol of lithium acetate, 0.708mol of lithium hydroxide, 7g of glucose, and 7g of polyethylene glycol (PEG) were fed into a ball mill; 200mL of anhydrous ethanol was added as the dispersant; the precursor slurry was obtained by grinding with 2mm zirconium balls for 1h; the precursor slurry was placed in a microwave oven for drying; the slurry was then transferred to a tube-type resistance furnace protected by an $N_2$ atmosphere; and sintering was carried out at 680°C for 6h, to prepare the lithium iron phosphate coated with carbon layer.

2. Preparation of lithium-ion batteries

Adopting the lithium iron phosphate coated with carbon layer prepared in the present example as the positive electrode active material, the preparation of the lithium-ion battery of the present example is carried out with reference to the scheme for preparing the lithium-ion battery adopted in Example 1, and except for the lithium iron phosphate coated with carbon layer adopted as the positive electrode active material, the other materials used for preparing the lithium-ion battery as well as the proportion and the operation in the present example are all strictly consistent with those corresponding to the descriptions in Example 1.

3. Raman spectroscopy

Raman spectroscopy using the lithium iron phosphate positive electrode active material coated with carbon layer prepared in the present example was strictly consistent with the corresponding descriptions in Example 1.

Example 16

1. Preparation of lithium iron phosphate coated with carbon layer

In step 1, the preparation of precursor $FePO_4$: 0.965mol ferrous sulfate heptahydrate ($FeSO_4 \cdot 7H_2O$) was dissolved in 100mL of deionized water; 100mL of phosphoric acid solution at a concentration of 10mol/L, 100mL of hydrogen peroxide at a concentration of 30% (mass fraction) and 6mL furfuryl alcohol monomer were added; and the reaction was carried out for 3h at 70°C. After the reaction was finished, the pH was adjusted to 1.5 by adding 0.1mol/L NaOH solution; after stirring at room temperature for 2h, the $FePO_4 \cdot 2H_2O$ coated with polyfurfuryl alcohol was obtained by filtration, rinsing, and grinding after drying for 5h at 90°C.

In step 2, the preparation of the lithium iron phosphate coated with carbon layer: the $FePO_4 \cdot 2H_2O$ coated with polyfurfuryl alcohol was dehydrated at 600°C for 6h in a box-type resistance furnace to obtain the $FePO_4$ coated with polyfurfuryl alcohol; the obtained dehydrated $FePO_4$ coated with polyfurfuryl alcohol, 0.308mol of lithium acetate, 0.708mol of lithium hydroxide, 7g of glucose, and 7g of polyethylene glycol (PEG) were fed into a ball mill; 200mL of anhydrous ethanol was added as the dispersant; the precursor slurry was obtained by grinding with 2mm zirconium balls for 3h; the precursor slurry was placed in a microwave oven for drying; the slurry was then transferred to a tube-type resistance furnace protected by an $N_2$ atmosphere; and sintering was carried out at 710°C for 8h, to prepare the lithium iron phosphate coated with carbon layer.

2. Preparation of lithium-ion batteries

Adopting the lithium iron phosphate coated with carbon layer prepared in the present example as the positive electrode active material, the preparation of the lithium-ion battery of the present example is carried out with reference to the scheme for preparing the lithium-ion battery adopted in Example 1, and except for the lithium iron phosphate coated with carbon layer adopted as the positive electrode active material, the other materials used for preparing the lithium-ion battery as well as the proportion and the operation in the present example are all strictly consistent with those corresponding to the descriptions in Example 1.

3. Raman spectroscopy

Raman spectroscopy using the lithium iron phosphate positive electrode active material coated with carbon layer prepared in the present example was strictly consistent with the corresponding descriptions in Example 1.

Contrast Example 1

1. Preparation of lithium iron phosphate coated with carbon layer

In step 1, the preparation of precursor $FePO_4$: 0.965mol ferrous sulfate heptahydrate ($FeSO_4 \cdot 7H_2O$) was dissolved in 100mL of deionized water; 100mL of phosphoric acid solution at a concentration of 10mol/L, 100mL of hydrogen peroxide at a concentration of 30% (mass fraction) and 5.5mL furfuryl alcohol monomer were added; and the reaction was carried out for 3h at 70°C. After the reaction was finished, the pH was adjusted to 1.5 by adding 0.1mol/L NaOH solution; after stirring at room temperature for 2h, the $FePO_4 \cdot 2H_2O$ coated with polyfurfuryl alcohol was obtained by filtration, rinsing, and grinding after drying for 5h at 90°C.

In step 2, the preparation of the lithium iron phosphate coated with carbon layer: the $FePO_4 \cdot 2H_2O$ coated with polyfurfuryl alcohol was dehydrated at 600°C for 6h in a box-type resistance furnace to obtain the $FePO_4$ coated with polyfurfuryl alcohol; the obtained dehydrated $FePO_4$ coated with polyfurfuryl alcohol, 0.308mol of lithium acetate, 0.708mol of lithium hydroxide, 6g of glucose, and 10g of polyethylene glycol (PEG) were fed into a ball mill; 200mL of anhydrous ethanol was added as the dispersant; the precursor slurry was obtained by grinding with 2mm zirconium balls for 2h; the precursor slurry was placed in a microwave oven for drying; the slurry was then transferred to a tube-type resistance furnace protected by an $N_2$ atmosphere; and sintering was carried out at 680°C for 6h, to prepare the lithium iron phosphate coated with carbon layer.

Adopting the lithium iron phosphate coated with carbon layer prepared in the present contrast example as the positive electrode active material, the preparation of the lithium-ion battery of the present contrast example is carried out with reference to the scheme for preparing the lithium-ion battery adopted in Example 1, and except for the lithium iron phosphate coated with carbon layer adopted as the positive electrode active material, the other materials used for preparing the lithium-ion battery as well as the proportion and the operation in the present contrast example are all strictly consistent with those corresponding to the descriptions in Example 1.

3. Raman spectroscopy

Raman spectroscopy using the lithium iron phosphate positive electrode active material coated with carbon layer prepared in the present contrast example was strictly consistent with the corresponding descriptions in Example 1.

Contrast Example 2

1. Preparation of lithium iron phosphate coated with carbon layer

In step 1, the preparation of precursor $FePO_4$: 0.965mol ferrous sulfate heptahydrate ($FeSO_4 \cdot 7H_2O$) was dissolved in 100mL of deionized water; 100mL of phosphoric acid solution at a concentration of 10mol/L, 100mL of hydrogen peroxide at a concentration of 30% (mass fraction) and 5mL furfuryl alcohol monomer were added; and the reaction was carried out for 3h at 70°C. After the reaction was finished, the pH was adjusted to 1.5 by adding 0.1mol/L NaOH solution; after stirring at room temperature for 2h, the $FePO_4 \cdot 2H_2O$ coated with polyfurfuryl alcohol was obtained by filtration, rinsing, and grinding after drying for 5h at 90°C.

In step 2, the preparation of the lithium iron phosphate coated with carbon layer: the $FePO_4 \cdot 2H_2O$ coated with polyfurfuryl alcohol was dehydrated at 600°C for 6h in a box-type resistance furnace to obtain the $FePO_4$ coated with polyfurfuryl alcohol; the obtained dehydrated $FePO_4$ coated with polyfurfuryl alcohol, 0.308mol of lithium acetate, 0.708mol of lithium hydroxide, 6g of glucose, and 10g of polyethylene glycol (PEG) were fed into a ball mill; 200mL of anhydrous ethanol was added as the dispersant; the precursor slurry was obtained by grinding with 2mm zirconium balls for 2h; the precursor slurry was placed in a microwave oven for drying; the slurry was then transferred to a tube-type resistance furnace protected by an $N_2$ atmosphere; and sintering was carried out at 680°C for 6h, to prepare the lithium iron phosphate coated with carbon layer.

Adopting the lithium iron phosphate coated with carbon layer prepared in the present contrast example as the positive electrode active material, the preparation of the lithium-ion battery of the present contrast example is carried out with reference to the scheme for preparing the lithium-ion battery adopted in Example 1, and except for the lithium iron phosphate coated with carbon layer adopted as the positive electrode active material, the other materials used for preparing the lithium-ion battery as well as the proportion and the operation in the present contrast example are all strictly consistent with those corresponding to the descriptions in Example 1.

3. Raman spectroscopy

Raman spectroscopy using the lithium iron phosphate positive electrode active material coated with carbon layer prepared in the present contrast example was strictly consistent with the corresponding descriptions in Example 1.

Contrast Example 3

1. Preparation of lithium iron phosphate coated with carbon layer

In step 1, the preparation of precursor $FePO_4$: 0.965mol ferrous sulfate heptahydrate ($FeSO_4 \cdot 7H_2O$) was dissolved in 100mL of deionized water; 100mL of phosphoric acid solution at a concentration of 10mol/L, 100mL of hydrogen peroxide at a concentration of 30% (mass fraction) and 8.5mL furfuryl alcohol monomer were added; and the reaction was carried out for 3h at 70°C. After the reaction was finished, the pH was adjusted to 1.5 by adding 0.1mol/L NaOH solution; after stirring at room temperature for 2h, the $FePO_4 \cdot 2H_2O$ coated with polyfurfuryl alcohol was obtained by filtration, rinsing, and grinding after drying for 5h at 90°C.

In step 2, the preparation of the lithium iron phosphate coated with carbon layer: the $FePO_4 \cdot 2H_2O$ coated with polyfurfuryl alcohol was dehydrated at 600°C for 6h in a box-type resistance furnace to obtain the $FePO_4$ coated with polyfurfuryl alcohol; the obtained dehydrated $FePO_4$ coated with polyfurfuryl alcohol, 0.308mol of lithium acetate, 0.708mol of lithium hydroxide, 10g of glucose, and 10g of polyethylene glycol (PEG) were fed into a ball mill; 200mL of anhydrous ethanol was added as the dispersant; the precursor slurry was obtained by grinding with 2mm zirconium balls for 2.5h; the precursor slurry was placed in a microwave oven for drying; the slurry was then transferred to a tube-type resistance furnace protected by an $N_2$ atmosphere; and sintering was carried out at 715°C for 8h, to prepare the lithium iron phosphate coated with carbon layer.

Adopting the lithium iron phosphate coated with carbon layer prepared in the present contrast example as the positive electrode active material, the preparation of the lithium-ion battery of the present contrast example is carried out with reference to the scheme for preparing the lithium-ion battery adopted in Example 1, and except for the lithium iron phosphate coated with carbon layer adopted as the positive electrode active material, the other materials used for preparing the lithium-ion battery as well as the proportion and the operation in the present contrast example are all strictly consistent with those corresponding to the descriptions in Example 1.

3. Raman spectroscopy

Raman spectroscopy using the lithium iron phosphate positive electrode active material coated with carbon layer prepared in the present contrast example was strictly consistent with the corresponding descriptions in Example 1.

Contrast Example 4

1. Preparation of lithium iron phosphate coated with carbon layer

In step 1, the preparation of precursor $FePO_4$: 0.965mol ferrous sulfate heptahydrate ($FeSO_4 \cdot 7H_2O$) was dissolved in 100mL of deionized water; 100mL of phosphoric acid solution at a concentration of 10mol/L, 100mL of hydrogen peroxide at a concentration of 30% (mass fraction) and 8.5mL furfuryl alcohol monomer were added; and the reaction was carried out for 3h at 70°C. After the reaction was finished, the pH was adjusted to 1.5 by adding 0.1mol/L NaOH solution; after stirring at room temperature for 2h, the $FePO_4 \cdot 2H_2O$ coated with polyfurfuryl alcohol was obtained by filtration, rinsing, and grinding after drying for 5h at 90°C.

In step 2, the preparation of the lithium iron phosphate coated with carbon layer: the $FePO_4 \cdot 2H_2O$ coated with polyfurfuryl alcohol was dehydrated at 600°C for 6h in a box-type resistance furnace to obtain the $FePO_4$ coated with polyfurfuryl alcohol; the obtained dehydrated $FePO_4$ coated with polyfurfuryl alcohol, 0.308mol of lithium acetate, 0.708mol of lithium hydroxide, 10g of glucose, and 9g of polyethylene glycol (PEG) were fed into a ball mill; 200mL of anhydrous ethanol was added as the dispersant; the precursor slurry was obtained by grinding with 2mm zirconium balls for 2.5h; the precursor slurry was placed in a microwave oven for drying; the slurry was then transferred to a tube-type resistance furnace protected by an $N_2$ atmosphere; and sintering was carried out at 720°C for 8h, to prepare the lithium iron phosphate coated with carbon layer.

Adopting the lithium iron phosphate coated with carbon layer prepared in the present contrast example as the positive electrode active material, the preparation of the lithium-ion battery of the present contrast example is carried out with reference to the scheme for preparing the lithium-ion battery adopted in Example 1, and except for the lithium iron phosphate coated with carbon layer adopted as the positive electrode active material, the other materials used for preparing the lithium-ion battery as well as the proportion and the operation in the present contrast example are all strictly consistent with those corresponding to the descriptions in Example 1.

3. Raman spectroscopy

Raman spectroscopy using the lithium iron phosphate positive electrode active material coated with carbon layer prepared in the present contrast example was strictly consistent with the corresponding descriptions in Example 1.

Contrast Example 5

1. Preparation of lithium iron manganese phosphate coated with carbon layer

In step 1, the preparation of precursor $FePO_4$: 0.965mol ferrous sulfate heptahydrate ($FeSO_4 \cdot 7H_2O$) was dissolved in 100mL of deionized water; 100mL of phosphoric acid solution at a concentration of 10mol/L, 100mL of hydrogen peroxide at a concentration of 30% (mass fraction) and 7.5mL furfuryl alcohol monomer were added; and the reaction was carried out for 3h at 70°C. After the reaction was finished, the pH was adjusted to 1.5 by adding 0.1mol/L NaOH solution; after stirring at room temperature for 2h, the $FePO_4 \cdot 2H_2O$ coated with polyfurfuryl alcohol was obtained by filtration, rinsing, and grinding after drying for 5h at 90°C.

In step 2, the preparation of the lithium iron manganese phosphate coated with carbon layer: the $FePO_4 \cdot 2H_2O$ coated with polyfurfuryl alcohol was dehydrated at 600°C for 6h in a box-type resistance furnace to obtain the $FePO_4$ coated with polyfurfuryl alcohol; the obtained dehydrated $FePO_4$ coated with polyfurfuryl alcohol, 0.308mol of lithium acetate, 0.708mol of lithium hydroxide, 7g of glucose, 7g of polyethylene glycol (PEG), and 20g of $MnO_2$ were fed into a ball mill; 200mL of anhydrous ethanol was added as the dispersant; the precursor slurry was obtained by grinding with 2mm zirconium balls for 2h; the precursor slurry was placed in a microwave oven for drying; the slurry was then transferred to a tube-type resistance furnace protected by an $N_2$ atmosphere; and sintering was carried out at 695°C for 6.5h, to prepare the lithium iron manganese phosphate coated with carbon layer.

The lithium iron manganese phosphate coated with carbon layer prepared in the present contrast example showed an $I_D/I_G$ value of 0.91, a thickness of the carbon layer of 3.6 nm, and a $D_{50}$ of 1.22$\mu$m.

2. Preparation of lithium-ion batteries

Adopting the lithium iron manganese phosphate coated with carbon layer prepared in the present contrast example as the positive electrode active material, the preparation of the lithium-ion battery of the present contrast example is carried out with reference to the scheme for preparing the lithium-ion battery adopted in Example 1, and except for the lithium iron manganese phosphate coated with carbon layer adopted as the positive electrode active material, the other materials used for preparing the lithium-ion battery as well as the proportion and the operation in the present contrast example are all strictly consistent with those corresponding to the descriptions in Example 1.

3. Raman spectroscopy

Raman spectroscopy using the lithium iron manganese phosphate positive electrode active material coated with carbon layer prepared in the present contrast example was strictly consistent with the corresponding descriptions in Example 1.

The ID/IG value, thickness of the carbon layer, and D50 of the lithium iron phosphate coated with carbon layer prepared in Examples 1-16 and Contrast Examples 1-5 are shown in Table 1 below.

Table 1

| Groups | $I_D/I_G$ of the lithium iron phosphate coated with carbon layer | Carbon layer thickness (nm) of the lithium iron phosphate coated with carbon layer | $D_{50}$ ($\mu$m) of the lithium iron phosphate coated with carbon layer |
|---|---|---|---|
| Example 1 | 0.90 | 3.5 | 1.20 |
| Example 2 | 0.97 | 3.0 | 1.04 |
| Example 3 | 0.85 | 3.8 | 1.28 |
| Example 4 | 0.89 | 4.1 | 1.26 |
| Example 5 | 0.91 | 3.2 | 1.14 |
| Example 6 | 1.13 | 3.9 | 1.32 |
| Example 7 | 0.81 | 2.9 | 1.15 |
| Example 8 | 1.06 | 4.2 | 1.25 |
| Example 9 | 0.82 | 2.7 | 1.09 |
| Example 10 | 0.79 | 4.6 | 1.35 |
| Example 11 | 1.05 | 3.1 | 0.98 |
| Example 12 | 1.21 | 2.3 | 0.87 |
| Example 13 | 0.96 | 7.2 | 1.56 |
| Example 14 | 1.17 | 1.6 | 0.81 |
| Example 15 | 1.02 | 5.1 | 1.67 |
| Example 16 | 0.93 | 2.3 | 0.69 |
| Contrast Example 1 | 0.69 | 4.3 | 1.43 |
| Contrast Example 2 | 0.62 | 4.1 | 1.37 |
| Contrast Example 3 | 1.29 | 3.9 | 1.52 |
| Contrast Example 4 | 1.32 | 3.3 | 1.48 |
| Contrast Example 5 | 0.91 | 3.6 | 1.22 |

Performance Test:

(1) Resistance of charge transfer ($R_{ct}$) Test:

The Reference 600 electrochemical workstation manufactured by GAMRY Instruments, Inc. in USA is employed to carry out the starting electrochemical impedance spectroscopy test, with lithium metal as the counter electrode and reference electrode, and the active material electrode sheet as the working electrode. Tests are performed in a 28°C environment with a scanning frequency of 100KHz to 0.01Hz and a scanning amplitude of 5mV. Charge transfer impedance and lithium-ion diffusion rate $D_{Li}$ in the electrochemical behavior of lithium iron phosphate cathode materials are studied by testing the electrochemical impedance spectra of the material. $D_{Li}$ is calculated using the following equation:

$$D_{Li}=R^2T^2/2A^2n^4F^4C^2\sigma^2$$

R--molecular gas constant, $8.314 Pa \cdot m^3 \cdot mol^{-1} \cdot K^{-1}$
T--absolute temperature (K)
A--surface area of cathode material ($m^2$)
n--number of electrons transferred per mole of active substance
F--Faraday constant ($6485.3383 \pm 0.0083 C/mol$)
C--Lithium-ion concentration (mol/L)
$\sigma$--Warburg Coefficient

The real part of the electrochemical impedance is related to $\sigma$ by the equation:

$$Z_{Re}=R_\Omega+R_{ct}+R_w= R_\Omega+R_{ct}+\sigma \cdot \omega^{-1/2}$$

$R_\Omega$ is the ohmic impedance, $R_{ct}$ is the charge transfer impedance, and Rw is the Warburg impedance. The Warburg Coefficient $\sigma$ is numerically equal to the slope of a line fitted by the real part of the electrochemical impedance ($Z_{Re}$) and the inverse of the square root of the angular frequency ($\omega^{-1/2}$).

(2) Test of the first discharge capacity per gram

Button cells were prepared to perform charge/discharge tests with a lithium-ion battery charge/discharge test system at $-20 \pm 0.5$°C. Charge cutoff voltage of 3.75V; discharge cutoff voltage of 2.00V; charge/discharge current density of 2C (nominal specific capacity of 150mAh/g).
The performance test results are shown in Table 2.

Table 2

| Groups | $R_{ct}(\Omega)$ | Li$^+$ diffusion coefficient (cm$^2$/s) | First discharge capacity per gram (mAh/g) at - 20°C with a charge/discharge current density 2C |
|---|---|---|---|
| Example 1 | 82.9 | $9.33 \times 10^{-11}$ | 88.7 |
| Example 2 | 84.3 | $8.76 \times 10^{-11}$ | 87.4 |
| Example 3 | 89.1 | $5.21 \times 10^{-11}$ | 83.4 |
| Example 4 | 84.2 | $8.93 \times 10^{-11}$ | 87.8 |
| Example 5 | 85.3 | $7.88 \times 10^{-11}$ | 86.3 |
| Example 6 | 99.9 | $9.78 \times 10^{-12}$ | 76.7 |
| Example 7 | 87.3 | $5.66 \times 10^{-11}$ | 84.9 |
| Example 8 | 96.5 | $1.69 \times 10^{-11}$ | 78.3 |
| Example 9 | 89.3 | $5.05 \times 10^{-11}$ | 82.9 |
| Example 10 | 122.3 | $3.18 \times 10^{-12}$ | 67.2 |
| Example 11 | 126.5 | $1.31 \times 10^{-12}$ | 64.9 |
| Example 12 | 123.6 | $2.85 \times 10^{-12}$ | 66.5 |
| Example 13 | 94.5 | $3.11 \times 10^{-11}$ | 81.2 |
| Example 14 | 125.6 | $2.13 \times 10^{-12}$ | 65.7 |
| Example 15 | 133.6 | $9.52 \times 10^{-13}$ | 62.8 |
| Example 16 | 95.7 | $2.51 \times 10^{-11}$ | 79.5 |
| Contrast Example 1 | 143.4 | $7.72 \times 10^{-13}$ | 58.2 |
| Contrast Example 2 | 136.7 | $8.97 \times 10^{-13}$ | 61.9 |
| Contrast Example 3 | 227.1 | $1.04 \times 10^{-13}$ | 42.6 |

(continued)

| Groups | $R_{ct}(\Omega)$ | Li$^+$ diffusion coefficient (cm$^2$/s) | First discharge capacity per gram (mAh/g) at - 20°C with a charge/discharge current density 2C |
|---|---|---|---|
| Contrast Example 4 | 153.4 | $6.75 \times 10^{-13}$ | 54.4 |
| Contrast Example 5 | 177.1 | $4.13 \times 10^{-13}$ | 48.9 |

As shown in Tables 1 and 2:

1. The lithium iron phosphate coated with carbon layer prepared in Examples 1-5, 7, 9, 13, and 16 showed $I_D/I_G$ values in a more preferred range of 0.8-1.0, with resistance of charge transfer ($R_{ct}$), lithium-ion diffusion rate $D_{Li}$, and the first discharge capacity per gram at a low temperature of -20°C with a charge/discharge current density 2C superior to the other Examples. The above results fully validated that the lithium iron phosphate coated with carbon layer showed an $I_D/I_G$ value of 0.8-1.0, with an $I_D/I_G$ value in such a range, which further improves the desolvation rate of Li$^+$ at the interface between the electrode and the electrolyte and enhances the desolvation ability, thereby increasing the electrical conductivity as well as rate performance of lithium iron phosphate and improving the low-temperature performance of lithium iron phosphate.

2. Compared with Example 2, the lithium iron phosphate coated with carbon layer prepared in Example 13 has a carbon layer thickness of 7.2 nm, with a thicker carbon layer thickness, so that the resistance of charge transfer ($R_{ct}$), lithium ion diffusion rate $D_{Li}$, and the first discharge capacity per gram at a low temperature of -20°C with a charge/discharge current density 2C in Example 13 were inferior to those in Example 2, but it was also possible to achieve the beneficial effects of the present disclosure. Compared with Example 6, the carbon layer thickness of the lithium iron phosphate coated with carbon layer prepared in Example 14 was 1.6 nm, with a thinner carbon layer thickness and less effective carbon coating than that of Example 6, so that the resistance of charge transfer ($R_{ct}$), the diffusion rate of lithium ions, $D_{Li}$, and the first discharge capacity per gram at a low temperature of -20° C with a charge/discharge current density 2C in Example 14 were inferior to those in Example 6, but it was also possible to achieve the beneficial effects of the present disclosure. The aforementioned results fully validated that the carbon layer thickness of 2-6 nm was shown to be excellent in coating lithium iron phosphate, reducing the polarization phenomenon during the migration process and playing a certain shielding role, thereby improving the stability of the battery, and the lithium-ion transport channel is short, which is conducive to further improving the rate performance of lithium-ion batteries.

3. Compared with Example 11, the lithium iron phosphate coated with carbon layer prepared in Example 15 had a larger $D_{50}$ of 1.67μm, so that the resistance of charge transfer ($R_{ct}$), the diffusion rate of lithium ions, $D_{Li}$, and the first discharge capacity per gram at a low temperature of -20° C with a charge/discharge current density 2C in Example 15 were inferior to those in Example 11, but it was also possible to achieve the beneficial effects of the present disclosure. Compared to Example 5, the lithium iron phosphate coated with carbon layer prepared in Example 16 had a smaller $D_{50}$ of 0.69μm, so that the resistance of charge transfer ($R_{ct}$), the diffusion rate of lithium ions, $D_{Li}$, and the first discharge capacity per gram at a low temperature of -20° C with a charge/discharge current density 2C in Example 16 were inferior to those in Example 5, but it was also possible to achieve the beneficial effects of the present disclosure. The aforementioned results fully validated that when $D_{50}$ is in the range of 0.8-1.6μm, the lithium-ion migration channel is short, which shortens the diffusion distance of Li$^+$ and further improves the rate performance of lithium-ion batteries, and also ensures a sufficiently sized particle diameter, so that the positive electrode active material is less likely to form soft agglomerates, which avoids blocking caused by the processing, and also further improves the rate performance of lithium-ion batteries.

4. The $I_D/I_G$ values of the lithium iron phosphate coated with carbon layer prepared in the contrast examples 1-2 were below the range of 0.75-1.2 of the present disclosure, and the $I_D/I_G$ values of the lithium iron phosphate coated with carbon layer prepared in the contrast examples 3-4 were above the range of 0.75-1.2 of the present disclosure. The resistance of charge transfer ($R_{ct}$), the diffusion rate of lithium ions, $D_{Li}$, and the first discharge capacity per gram at a low temperature of -20° C with a charge/discharge current density 2C in Contrast Examples 1-4 were significantly lower than those in Examples 1-16, and they fail to achieve the beneficial effect of the present disclosure for promoting the transfer of Li$^+$ at the interface of the electrodes and the electrolyte and increasing the electrical conductivity of LiFePO$_4$ to improve the rate performance and improve the low-temperature performance of positive electrode material of lithium iron phosphate. The aforementioned results fully validated that when the $I_D/I_G$ value of lithium iron phosphate coated with carbon layer in the present disclosure is 0.75-1.2, the desolvation rate of Li$^+$ at the interface between the electrode and the electrolyte is improved, which enhances the desolvation ability, thereby increasing the electrical conductivity of lithium iron phosphate as well as the rate performance, and improves the low-temperature performance of lithium iron phosphate.

The $I_D/I_G$ value of the lithium iron manganese phosphate coated with carbon layer prepared in Contrast Example 5 was 0.91, the carbon layer thickness was 3.6 nm, and the $D_{50}$ was 1.22 μm, which were about the same as those of the lithium iron phosphate coated with carbon layer prepared in Example 1, which showed an $I_D/I_G$ value of 0.90, a carbon layer thickness of 3.5 nm, and a $D_{50}$ of 1.20 μm. However, the resistance of charge transfer ($R_{ct}$), the diffusion rate of lithium ions, $D_{Li}$, and the first discharge capacity per gram at a low temperature of -20° C with a charge/discharge current density 2C in Contrast Example 5 was significantly lower than those in Example 1 and were the worst among all the Examples and the Contrast Examples. The above results fully validated that if the present disclosure aims to improve the Li$^+$ transfer rate at the interface between the electrode and the electrolyte, to improve the electrical conductivity of the lithium iron phosphate, and to improve the rate performance and improve the low-temperature performance of the lithium iron phosphate, the lithium iron phosphate material coated with carbon layer should be satisfied, and the $I_D/I_G$ of the material should be 0.75-1.2 in order to achieve the beneficial effects of the present disclosure.

**Claims**

1.  A positive electrode active material, comprising lithium iron phosphate coated with a carbon layer, and an $I_D/I_G$ value of the positive electrode active material is 0.75-1.2, wherein a peak intensity at a wave length of 1360 cm$^{-1}$ is considered as $I_D$, and a peak intensity at a wave length of 1580 cm$^{-1}$ is considered as $I_G$ in a Raman spectrum of the positive electrode active material, the Raman testing being conducted as specified in the description;

    wherein a method of preparing the positive electrode active material comprises following steps: ball-milling a mixture of a FePO4 precursor, a lithium source, a carbon source, and a dispersant, and sintering to prepare the positive electrode active material;
    wherein the carbon source comprises the glucose and the polyethylene glycol, wherein a mass ratio of the glucose to the polyethylene glycol is (0.6-1.2):1.

2.  The positive electrode active material according to claim 1, wherein the $I_D/I_G$ value of the positive electrode active material is 0.8-1.0.

3.  The positive electrode active material according to claim 1, wherein a thickness of the carbon layer is 2-6 nm.

4.  The positive electrode active material according to claim 1, wherein the $FePO_4$ precursor comprises at least one of $FePO_4$ and $FePO_4$ coated with a carbon source.

5.  The positive electrode active material according to claim 1, wherein a temperature of the sintering is 680- 720°C.

6.  A lithium-ion battery, comprising a positive electrode active material as claimed in claims -5 .

**Patentansprüche**

1.  Positivelektroden-Aktivmaterial, umfassend Lithiumeisenphosphat, das mit einer Kohlenstoffschicht beschichtet ist, und ein $I_D/I_G$-Wert des Positivelektroden-Aktivmaterials 0.75-1.2 ist, worin eine Spitzenintensität bei einer Wellenlänge von 1360 cm$^{-1}$ als $I_D$ betrachtet wird, und eine Spitzenintensität bei einer Wellenlänge von 1580 cm$^{-1}$ in einem Raman-Spektrum des Positivelektroden-Aktivmaterials als $I_G$ betrachtet wird, wobei die Raman-Untersuchung wie in der Beschreibung spezifiziert durchgeführt wird;

    worin ein Verfahren des Herstellens des Positivelektroden-Aktivmaterials folgende Schritte umfasst: Kugelmahlen einer Mischung eines FePO4-Vorläufers, einer Lithiumquelle, einer Kohlenstoffquelle und eines Dispergiermittels, und Sintern, um das Positivelektroden-Aktivmaterial herzustellen;
    worin die Kohlenstoffquelle die Glukose und das Polyethylenglykol umfasst, worin ein Massenverhältnis der Glukose zum Polyethylenglykol (0.6-1.2):1 ist.

2.  Positivelektroden-Aktivmaterial nach Anspruch 1, worin der $I_D/I_G$-Wert des Positivelektroden-Aktivmaterials 0.8-1.0 ist.

3.  Positivelektroden-Aktivmaterial nach Anspruch 1, worin eine Dicke der Kohlenstoffschicht 2-6 nm ist.

**4.** Positivelektroden-Aktivmaterial nach Anspruch 1, worin der $FePO_4$-Vorläufer zumindest eines von $FePO_4$ und $FePO_4$, das mit einer Kohlenstoffquelle beschichtet ist, umfasst.

**5.** Positivelektroden-Aktivmaterial nach Anspruch 1, worin eine Temperatur des Sinterns 680-720°C ist.

**6.** Lithium-Ionen-Batterie, umfassend ein Positivelektroden-Aktivmaterial nach den Ansprüchen 1-5.

**Revendications**

**1.** Matériau actif d'électrode positive, comprenant du phosphate de fer et de lithium revêtu d'une couche de carbone, et une valeur $I_D/I_G$ du matériau actif d'électrode positive est de 0.75-1.2, dans lequel une intensité de crête à une longueur d'onde de 1360 cm$^{-1}$ constitue $I_D$, et une intensité de crête à une longueur d'onde de 1580 cm$^{-1}$ constitue $I_G$ dans un spectre Raman du matériau actif d'électrode positive, le test Raman étant effectué comme spécifié dans la description ;

dans lequel un procédé de préparation du matériau actif d'électrode positive comprend les étapes suivantes : le broyage à boulets d'un mélange d'un précurseur de FePO4, d'une source de lithium, d'une source de carbone et d'un dispersant, et le frittage pour préparer le matériau actif d'électrode positive ;
dans lequel la source de carbone comprend le glucose et le polyéthylène glycol, dans lequel un rapport massique du glucose au polyéthylène glycol est de (0.6-1.2):1.

**2.** Matériau actif d'électrode positive selon la revendication 1, dans lequel la valeur $I_D/I_G$ du matériau actif d'électrode positive est de 0.8-1.0.

**3.** Matériau actif d'électrode positive selon la revendication 1, dans lequel une épaisseur de la couche de carbone est de 2-6 nm.

**4.** Matériau actif d'électrode positive selon la revendication 1, dans lequel le précurseur de $FePO_4$ comprend au moins un élément parmi $FePO_4$ et $FePO_4$ revêtu d'une source de carbone.

**5.** Matériau actif d'électrode positive selon la revendication 1, dans lequel la température du frittage est de 680-720 °C.

**6.** Batterie lithium-ion comprenant un matériau actif d'électrode positive selon les revendications 1-5.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3614466 B1
- EP 3799159 A1
- EP 3301741 A1
- EP 3178785 A1